**Europäisches Patentamt**

(19) **European Patent Office**

**Office européen des brevets**

(11) Numéro de publication: **0 025 585**
**B1**

(12) **FASCICULE DE BREVET EUROPEEN**

(45) Date de publication du fascicule du brevet: **14.12.83**

(51) Int. Cl.³: **C 03 B 37/14**

(21) Numéro de dépôt: **80105402.4**

(22) Date de dépôt: **10.09.80**

(54) Procédé et dispositif de soudage des fibres optiques.

(30) Priorité: **14.09.79 CH 8329/79**

(43) Date de publication de la demande:
**25.03.81 Bulletin 81/12**

(45) Mention de la délivrance du brevet:
**14.12.83 Bulletin 83/50**

(84) Etats contractants désignés:
**AT BE CH DE FR GB IT LI LU NL SE**

(56) Documents cités:
**FR - A - 2 156 554**
**FR - A - 2 300 744**
**FR - A - 2 319 588**
**FR - A - 2 323 646**
**FR - A - 2 386 830**
**GB - A - 1 500 026**

(73) Titulaire: **CABLOPTIC S.A.**
**CH-2016 Cortaillod (CH)**

(72) Inventeur: **Bendit, Jean-Pierre**
**Vieilles Oeuches**
**CH-2892 Courgenay (CH)**
Inventeur: **Widmer, Georges**
**Berghausweg 21**
**CH-2501 Bienne (CH)**
Inventeur: **Pellaux, Jean-Paul**
**Petits Chênes 2**
**CH-2000 Neuchatel (CH)**

(74) Mandataire: **Nithardt, Roland**
**CABINET ROLAND NITHARDT Rue Edouard**
**Verdan 15**
**CH-1400 Yverdon (CH)**

Courier Press, Leamington Spa, England.

(56) Documents cités:

**Revue Américaine:"The Bell System Technical Journ al"**, Vol. 50, no. 10, décembre 1971, pages 3153-3158; figure 4 D.L. BISBEE: "Optical Fiber Joining Technique"
**Revue Américaine: "Review of the Electrical Communication Laboratories"**, vol. 27, no. 7-8, juillet-août 1979, pages 532-542 I. HATAKEYAMA: "Fusion Splices for Single-Mode Optical Fibers by Discharge Heating
**DEUXIEME COLLOQUE EUROPEEN SUR LES TRANSMISSIONS PAR FIBRES OPTIQUES, Tour Olivier de Serres, 27-30 septembre 1976 Paris FR R. JOCTEUR & A. TARDY: "Jonction de fibres optiques au chalumeau à arc plasma et au microchalumeau oxy-hydrique"**, pages 261-265

Procédé et dispositif de soudage des fibres optiques.

La présente invention concerne un procédé de soudage des extrémités de fibres optiques pour réaliser une jonction optique entre deux fibres alignées, comportant chacune un coeur et un manteau de verre dans lequel on dispose, en regard l'une de l'autre, les extrémités des deux fibres à souder, sectionnées transversalement, en position approximativement alignée, et dans lequel on chauffe les extrémités des fibres de manière à provoquer la fusion de la matière et une soudure des fibres par solidification de la matière fondue.

Elle concerne également un dispositif pour la mise en oeuvre de ce procédé, comportant des moyens pour amener et maintenir les fibres à souder en contact dans une position approximativement alignée, des moyens pour contrôler visuellement la position de ces fibres et des moyens pour chauffer les extrémités des fibres.

Dans un tel procédé, d'une façon générale, il s'agit de réaliser une soudure à l'endroit d'une section plane des deux fibres, de telle façon que les coeurs et les manteaux de ces fibres soient joints dans une position strictement alignée et que l'atténuation de l'intensité de lumière au niveau de la jonction ait une valeur minimale. A cet effet, on prépare d'abord les extrémités des deux fibres de manière à leur conférer une surface de section plane, perpendiculaire à l'axe de la fibre. Puis on place les fibres dans un dispositif de support permettant de positionner les extrémités à joindre et l'on effectue le soudage par apport de chaleur à l'endroit de la jonction.

L'article de I. Hatakeyama et al. "Fusion splices for optical fibers by discharge heating" paru dans "Review of the Electrical Communication Laboratories" vol. 27, nᵒˢ 7—8 (1979), pages 532—542 décrit un procédé et un dispositif de soudage des fibres optiques utilisant la décharge électrique pour provoquer la fusion de la matière.

Du fait que les deux fibres en regard sont fondues à leur extrémité, il est nécessaire de pousser les fibres l'une vers l'autre en cours de soudage pour compenser la perte de longueur due à la fusion de la matière. Cette opération est particulièrement délicate et nécessite un appareillage compliqué ainsi que beaucoup de soin de la part du manipulateur. Cette méthode est utilisable en laboratoire, mais non sur le terrain.

L'article de D.L.-BISBEE "Optical Fiber Joining Technique" paru dans la revue "The Bell System Technical Journal" vol. 50, nᵒ 10 (1971), pages 3153—3158 décrit également un procédé et un dispositif de soudage de fibres optiques, qui utilise un fil résistant pour chauffer les extrémités de ces fibres.

Ce procédé ne permet pas d'atteindre des températures suffisantes pour souder les fibres de silice. En outre, selon ce procédé, les fibres doivent être maintenues à une certaine distance l'une de l'autre, ce qui nécessite un contrôle très précis et une manipulation très méticuleuse.

La présente invention vise à pallier les inconvénients des procédés de soudage utilisés jusqu'à présent et à fournir un procédé permettant d'éviter l'emploi de sources d'énergie à haute tension électrique et de supports devant assurer un alignement extrêmement précis et une pression axiale lors du soudage. L'invention se propose également d'améliorer la qualité de la jonction optique obtenue en réduisant les pertes de lumière au niveau de la jonction et notamment en réduisant les écarts de l'atténuation sur un grand nombre de jonctions réalisées.

L'invention a en outre comme but de mettre à disposition de l'utilisateur, et notamment de l'installateur de lignes de télécommunications optiques, un appareil simple à manipuler, pouvant être utilisé à l'extérieur et ne nécessitant pas l'intervention d'un technicien hautement qualifié.

A cet effet, le procédé de soudage selon l'invention présente les étapes indiquées dans la partie caractérisante de la revendication 1, des formes de mise en oeuvre particulièrement avantageuses étant mentionnées dans les revendications 2 à 4.

L'invention sera mieux comprise à la lumière de la description d'exemples de mise en oeuvre donnés ci-après, à titre d'exemple, et illustrés par le dessin annexé, dans lequel:

La figure 1 est une vue de dessus, schématique, d'un dispositif de soudage utilisable pour la réalisation de jonctions suivant l'invention,

La figure 2 est un graphique montrant l'atténuation de lumière à travers une jonction en fonction du temps de chauffage de celle-ci.

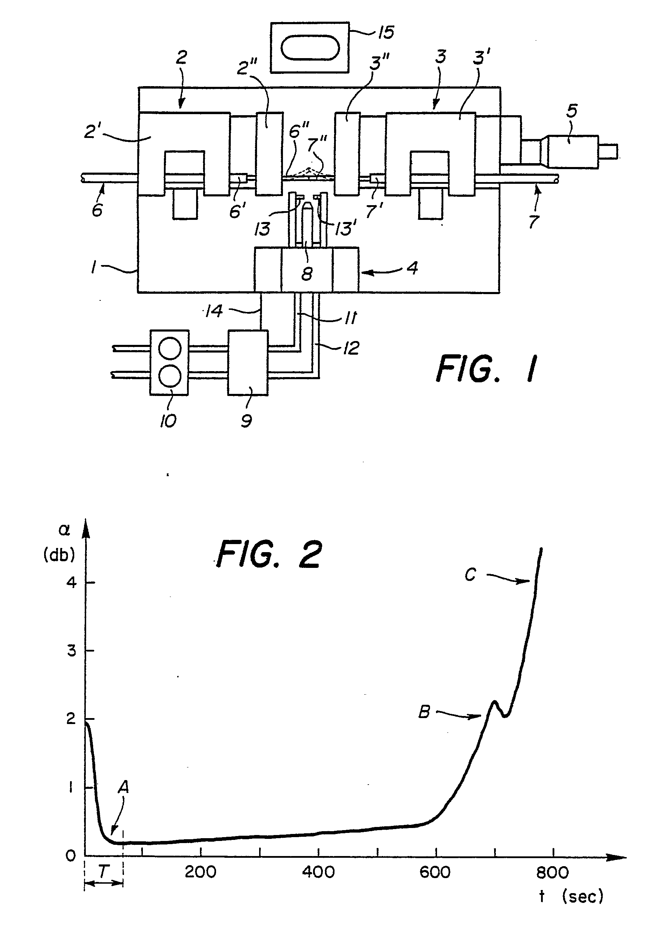

Le dispositif représenté schématiquement à la figure 1 comporte un poste de soudage 1 dont les éléments essentiels sont un support de fibre fixe 2, un support de fibre déplaçable 3 et un microbrûleur 4. Les supports de fibre 2 et 3 comprennent chacun un dispositif de maintien de la partie gaînée de la fibre désigné respectivement par 2' et 3', ainsi qu'un dispositif de maintien de la partie dénudée de la fibre, soit 2" et 3". Ces dispositifs peuvent être d'un type connu et comportent par exemple une plaque de support munie d'une rainure en forme de V et un couvercle soumis à la force d'un ressort permettant de serrer la fibre dans ladite rainure. L'un des supports, ici le support 3, est déplaçable dans le sens axial de la fibre fixée, par l'actionnement, par exemple, d'une vis micrométrique 5.

Deux fibres optiques 6 et 7 sont représentées schématiquement et à échelle agrandie. On distingue ainsi les parties gaînées 6', 7' et les extrémités dénudées 6", 7" de ces fibres qui sont placées bout à bout en position approximativement alignée.

En face de l'endroit de jonction est disposée une buse 8 du microbrûleur 4. Cette buse est réglable dans sa position par rapport à la jonction à réaliser, au moyen d'un dispositif non représenté. L'alimentation du brûleur en oxygène et, de préférence, en propane, s'effectue par l'intermédiaire de conduits 11 et 12. Un dispositif de commande et de régulation de débit 9 et des manomètres 10 sont insérés dans les conduites de gaz respectives, de façon à permettre de régler la caractéristique de la flamme et la durée de sa présence. Des électrodes d'amorce 13, 13' sont disposées au voisinage de la buse et sont également commandées par l'intermédiaire du dispositif de commande 9, ce qui est représenté schématiquement par la connexion 14. Enfin, un dispositif d'observation des extrémités de fibres est représenté schématiquement en 15.

Pour la mise en oeuvre du procédé selon l'invention, les fibres sont mises en place dans le supports respectifs 2 et 3, les extrémités étant dénudées et les surfaces de contact préparées d'une manière usuelle de façon à présenter une surface plane, perpendiculaire à l'axe de la fibre.

Conformément à un aspect de l'invention, les extrémités des fibres sont fixées de façon à pouvoir se déplacer latéralement l'une par rapport à l'autre et les parties en contact ne sont pas rigoureusement alignées. D'autre part, les fibres sont positionnées de manière à ce qu'elles n'exercent pas de force axiale l'une ser l'autre lors du soudage. Pour assurer un tel positionnement, une méthode préférentielle consiste à déplacer d'abord l'une des fibres, la fibre 7 en l'occurence, axialement par rapport à l'autre, pour produire un écartement latéral des extrémités, tel que montré de façon exagérée en traits pointillés à la figure 1. Puis on déplace la fibre 7 en sens inverse jusqu'au point où cet écartement latéral disparaît, ce qui peut être observé, de façon suffisamment nette, au moyen d'un dispositif d'observation visuelle 15 approprié, par exemple, un binoculaire.

Lorsque les fibres sont ainsi positionnées sans effort axial, de façon déplaçable latéralement, on enclenche le brûleur 4, dans lequel la position de la buse et la caractéristique de la flamme ont été réglées au préalable de façon à engendrer un champ de chaleur prédéterminé. Le chauffage a lieu pendant une durée également prédéterminée, réglée au moyen du dispositif 9.

Conformément à l'invention, le champ de chaleur et la durée du chauffage sont déterminés de telle façon que seul le manteau de la fibre subit une fusion partielle et que le coeur de la fibre reste intact. Une faible quantité de matériau fondu pénètre alors, par capillarité, dans l'espace entre les surfaces de contact des deux fibres. D'autres part, le ramollissement local de manteau des deux fibres engendre des tensions superficielles autour de la jonction et celles-ci tendent à amener les deux extrémités des fibres dans la position d'équilibre, autrement dit dans la position alignée. Il se produit ainsi un effet d'alignement automatique des fibres. En outre, au moment où les fibres se trouvent alignées, leur déplacement latéral s'arrête et, à ce moment, le film de matériau fondu, ayant pénétré entre les deux surfaces en contact, se solidifie par absorption de la chaleur présente, par les parties voisines, froides, du coeur des deux fibres.

Le présent procédé conduit donc à un auto-alignement des fibres, suivi d'un soudage dans lequel le coeur des fibres reste intact.

La figure 2 illustre l'effet de la durée de chauffage t sur l'atténuation $\alpha$ de la lumière par la jonction. On s'aperçoit que, dans un champ de chaleur adéquat, qui produit seulement une fusion partielle du manteau des fibres, l'atténuation diminue jusqu'à ce que les fibres atteignent la position d'alignement (région A). Si l'on chauffe les fibres plus longtemps, l'atténuation augmente d'abord lentement puis brusquement, comme indiqué à la fig. 2 (région B), le coeur des fibres étant alors attaqué. Enfin, assez rapidement, on arrive à la rupture de la fibre (région C). Le temps de travail idéal est donc approximativement égal au temps T indiqué sur la fig. 2, suivant l'apparition d'un minimum de l'atténuation. On s'aperçoit que ce temps n'est pas très critique, ce qui facilite le choix des paramètres de travail pour la fabrication en série de jonctions du même type.

Il s'avère que la qualité des jonctions réalisées par le présent procédé est excellente, les atténuations résultantes étant extrêmement basses et la dispersion sur un grand nombre de jonctions étant très faible.

Pour l'application pratique du procédé, l'absence d'une source d'énergie à haute tension d'une part, et, d'autre part, la simplification considérable du dispositif de support tant du point de vue de sa conception que de sont utilisation, constituent des avantages déterminants pour la technique de jonction de fibres optiques.

## Revendications

1. Procédé de soudage des extrémités (6", 7") de fibres optiques (6, 7) pour réaliser une jonction optique entre deux fibres alignées comportant chacune un coeur et un manteau de verre, dans lequel on dispose, en regard l'une de l'autre, les extrémités (6", 7") des deux fibres à souder, sectionnées transversalement, en position approximativement alignée, et dans lequel on chauffe les extrémités (6", 7") des fibres de manière à provoquer la fusion de la matière et une soudure des fibres (6, 7) par solidification de la matière fondue, caractérisé en ce que l'on dispose les fibres (6, 7) de telle manière que les deux extrémités (6", 7") planes de ces fibres soient en contact l'une avec l'autre sans qu'une pression axiale ne s'exerce entre ces extrémités, et en ce que l'on chauffe de manière contrôlée les extrémités (6", 7") pour provoquer une fusion périphérique et partielle en épaisseur du manteau en maintenant intact le coeur des fibres (6, 7).

2. Procédé selon la revendication 1, caractérisé en ce que l'on chauffe les extrémités (6″, 7″) des fibres au moyen d'une flamme.

3. Procédé selon la revendication 2, caractérisé en ce que la flamme est celle d'un mélange propane-oxygène.

4. Procédé selon la revendication 1, caractérisé en ce que lors du positionnement des fibres (6, 7), on déplace celles-ci axialement l'une vers l'autre de façon à ce que les extrémités (6″, 7″) en contact s'écartent latéralement, puis on déplace ces fibres axialement en sens inverse jusqu'à ce que ledit écartement disparaisse.

5. Dispositif pour la mise en oeuvre du procédé selon la revendication 1, comportant des moyens (2, 3, 5) pour amener et maintenir les fibres (6, 7) à souder en contact dans une position approximativement alignée, des moyens (15) pour contrôler visuellement la position de ces fibres et des moyens (4) pour chauffer les extrémités (6″, 7″) des fibres, caractérisé en ce que les moyens (4) pour chauffer les extrémités (6″, 7″) des fibres sont agencés pour déterminer la distribution du champ de chaleur ainsi que la durée du chauffage, et en ce que les moyens (15) pour contrôler la position des fibres (6, 7) permettent de déterminer visuellement l'absence de pression de contact axial entre les extrémités (6″, 7″) des fibres (6, 7).

6. Dispositif selon la revendication 5, caractérisé en ce que les moyens pour chauffer les extrémités (6″, 7″) des fibres (6, 7) comportent une flamme obtenue par combustion d'un mélange de propane et d'oxygène.

## Patentansprüche

1. Verfahren zum Schweißen der Enden (6″, 7″) von Lichtleitfasern (6, 7) zur optischen Verbindung zwischen zwei fluchtenden Fasern, von denen jede einen Kern und eine Außenschicht aus Glas aufweist, wobei die quer durchtrennten Enden (6″, 7″) der beiden zu verschweißenden Fasern einander gegenüber in einer annähernd fluchtenden Lage angeordnet und zum Erreichen eines Verschmelzens des Materials und einer innigen Verbindung der Fasern (6, 7) durch eine Verfestigung des geschmolzenen Materials erwärmt werden, dadurch gekennzeichnet, daß die Fasern (6, 7) derart angeordnet werden, daß die beiden ebenen Faserenden (6″, 7″) einander ohne Ausübung eines axialen Druckes aufeinander berühren, und daß die Enden (6″, 7″) derart gesteuert erwärmt werden, daß eine Verschmelzung an der Oberfläche und über einen Teil der Dicke der Außenschicht erreicht wird, während der Kern unberührt bleibt.

2. Verfahren nach Anspruch 1, dadurch gekennzeichnet, daß die Faserenden (6″, 7″) mittels einer Flamme erwärmt werden.

3. Verfahren nach Anspruch 2, dadurch gekennzeichnet, daß die Flamme durch ein Propan-Sauerstoff-Gemisch genährt wird.

4. Verfahren nach Anspruch 1, dadurch gekennzeichnet, daß nach der Lagerung der Fasern (6, 7) diese axial gegeneinander verschoben werden, bis die einander berührenden Enden (6″, 7″) seitlich ausweichen, und daß dann diese Fasern im axialen Gegensinn verschoben werden, bis die besagte Abweichung verschwindet.

5. Vorrichtung zur Durchführung des Verfahrens nach Anspruch 1, bestehend aus Mitteln (2, 3, 5), die Fasern (6, 7) in einer annähernd fluchtenden Lage in Berührung zu bringen und die Berührung aufrecht zu halten, Mitteln (15) zur visuellen Überwachung der Lage dieser Fasern und aus Mitteln (4) zum Erwärmen der Faserenden (6″, 7″), dadurch gekennzeichnet, daß die Mittel zum Erwärmen der Faserenden (6″, 7″) die Verteilung des Wärmefeldes sowie die Erwärmungsdauer bestimmen und daß die Mittel (15) zur Überwachung der Lage der Fasern (6, 7) ein visuelles Erkennen des Fehlens eines axialen Berührungsdruckes zwischen den Enden (6″, 7″) der Fasern (6, 7) gestatten.

6. Vorrichtung nach Anspruch 5, dadurch gekennzeichnet, daß die Mittel zum Erwärmen der Enden (6″, 7″) der Fasern (6, 7) aus einer durch Verbrennung eines Gemisches aus Propan und Sauerstoff erhaltenen Flamme bestehen.

## Claims

1. Process for fusion joining of the ends (6″, 7″) of optical fibers (6, 7) to produce an optical junction between two aligned fibers each of which fibers comprises a glass core and a glass sheathing in which the ends (6″, 7″) of the two fibers to be fusion joined are disposed facing each other, with their faces cut transversely, in an approximately aligned position, and in which the ends (6″, 7″) of the fibers are heated, so as to cause fusion of the material and a fusion junction of fibers (6, 7) by solidification of the fusing material, characterized in that the fibers (6, 7) are disposed so that their two plane ends (6″, 7″) are in contact each with another without axial force between these ends, and in that the ends (6″, 7″) are heated in a controlled manner, so as to cause in depth of the sheathing a peripheral and partial fusion while maintaining the cores of the fibers (6, 7) intact.

2. Process according to claim 1, characterized in that the ends (6″, 7″) of the fibers are heated by means of a flame.

3. Process according to claim 2, characterized in that the flame is a flame from a mixture of propane and oxygen.

4. Process according to claim 1, characterized in that in positioning the fibers (6, 7) they are displaced axially with respect to each other so that the ends (6″, 7″) are in contact are deflected laterally, and then the fibers are displaced axially in the reverse direction until the said deflection disappears.

5. Device for carrying out the process of claim 1, comprising means (2, 3, 5) to bring and maintain the fibers (6, 7) to be fusion joined in contact in an approximately aligned position, further comprises means (15) to control visually the position of the fibers and comprises means (4) for heating the ends (6″, 7″) of the fibers, characterized in that the means (4) for heating the ends (6″, 7″) of the fibers are adapted for establishing the distribution of the heat field and for controlling the duration of the heating, and in that the means (15) for controlling the position of the fibers (6, 7) permit a visual control of the absence of axial force between the ends (6″, 7″) of the fibers (6, 7).

6. Device according to claim 5, characterized in that the means for heating the ends (6″, 7″) of the fibers (6, 7) comprises a flame obtained by combustion of a mixture of propane and oxygen.

FIG. 1

FIG. 2